# DEMANDE DE BREVET EUROPEEN

(11) **EP 1 882 860 A1**
(43) Date de publication de la demande: **30.01.2008**
(21) Numéro de dépôt: 07014514.9
(22) Date de dépôt: 24.07.2007
(51) Int. Cl.: F16B 19/10

(54) **Procédé de fixation structurelle par rivet aveugle, rivet aveugle permettant de la mettre en oeuvre et outil de pose adapté à un tel rivet**

(30) Priorité: 25.07.2006 FR 0653114
(71) Demandeur: Ateliers de la Haute -Garonne ETS Auriol et Cie, 31130 Flourens (FR); Ateliers de la Haute-Garonne Rivets, 31130 Flourens (FR); ERIS, 31130 Flourens (FR)
(72) Inventeur: Auriol, Jean -Marc, 31130 Flourens (FR); Auriol, Pierre, 31130 Flourens (FR)
(74) Mandataire: Thurgood, Alexander John

(57) **Abrégé**

L'invention concerne un procédé de fixation structurelle utilisant un rivet aveugle (R) comprenant une tige (100) qui, dotée d'une tête (110) et d'une partie filetée (120), est disposée à l'intérieur d'une douille (200) creuse comprenant une première extrémité équipée d'une tête (210) et une deuxième extrémité (220) sur laquelle un écrou (300) coopérant avec la partie filetée de la tige (100) vient exercer un effort transmis par la tige (100) de sorte qu'une deuxième surface d'appui sur le deuxième élément soit créée par déformation, remarquable en ce qu'il consiste
- à imprimer un premier mouvement de translation (flèche F1) à la tige (100) afin de créer, par déformation sous l'action dudit écrou, ladite deuxième surface d'appui, puis
- à imprimer un deuxième mouvement de rotation (flèche F4) à ladite tige (100) à des fins de vissage pour installer une tension dans la fixation créée.

L'invention concerne également le rivet permettant de mettre en oeuvre un tel procédé ainsi que l'outil de pose adapté audit rivet.

Applications : fixation, rivetage.

## Description

### DOMAINE D'APPLICATION DE L'INVENTION

La présente invention a trait au domaine des rivets aveugles à tête fraisée ou non et notamment aux adaptations permettant d'optimiser leur utilisation et la fixation qu'ils proposent.

### DESCRIPTION DE L'ART ANTÉRIEUR

Afin d'éviter que la tête de la fixation ne forme une saillie au-dessus de la surface de la pièce à fixer, il existe dans l'art antérieur des rivets aveugles à tête fraisée composés d'une tige filetée, d'une douille creuse et d'un écrou. Cet ensemble est par exemple, introduit dans deux trous coaxiaux ménagés dans des éléments destinés à être fixés. Un de ces trous coaxiaux est préformé d'une fraisure correspondant au volume de la tête fraisée de la douille. Le procédé de fixation consiste classiquement à faire tourner la tige par rapport à la douille de façon à faire se déplacer l'écrou vers la tête et à créer par expansion de la douille ou de l'écrou un bulbe permettant de proposer une deuxième surface d'appui qui, par rapprochement vers la tête de la douille, va assurer la fixation souhaitée. L'utilisation d'une liaison hélicoïdale permet par un mouvement de rotation d'assurer le mouvement en translation nécessaire à la fixation. En outre, le vissage permet d'installer un serrage, une tension, dans la fixation une fois les deux surfaces d'appui créées.

Néanmoins, ce type de rivet et de procédé a pour inconvénients de nécessiter des volumes en saillie ou en retrait sur la surface extérieure de la tête de la douille afin de la bloquer en rotation lorsque la tige est vissée. De même, lorsqu'il est possible dans l'art antérieur qu'une tête puisse être placée au-dessus de la surface de la pièce à fixer, cette tête présente également des volumes en saillie ou en retrait où bien des plans d'appui pour un outil de pose et de serrage afin d'éviter la rotation de la douille lors de la pose.

De plus, les demandeurs ont constaté dans les rivets de l'art antérieur que la rupture de la tige filetée nécessaire pour éviter la saillie de cette dernière par rapport à la tête laissait un volume en saillie au niveau de ladite tête.

Ces volumes en saillie ou en retrait offrent une prise au vent définissant une traînée irrégulière que les constructeurs aéronautiques essaient d'éviter.

### DESCRIPTION DE L'INVENTION

Partant de cet état de fait, les demandeurs ont mené des recherches visant à éviter la présence de volumes en saillie ou en retrait sur la surface extérieure de la tête de la douille que ces volumes soient issus de la douille ou de la tige filetée.

Ces recherches ont abouti à la conception d'un procédé de fixation structurelle par rivet aveugle nouveau et inventif résolvant les inconvénients de l'art antérieur et requérant un rivet présentant des caractéristiques adaptées.

Selon l'invention, le procédé de fixation structurelle d'au moins deux éléments dans lesquels des orifices de fixation ont été aménagés et rendus coaxiaux, utilise un rivet aveugle se plaçant dans les orifices de fixation et comprenant une tige qui, dotée d'une tête et d'une partie filetée, est introduite dans une douille creuse comprenant
une première extrémité équipée d'une tête qui constitue une première surface d'appui sur un premier élément, et
une deuxième extrémité sur laquelle un écrou coopérant avec la partie filetée de la tige vient exercer un effort transmis par la tige de sorte qu'une deuxième surface d'appui sur le deuxième élément soit créée par déformation.

Ce procédé est remarquable en ce qu'il consiste
- à imprimer un premier mouvement de translation à la tige afin de créer, par déformation sous l'action dudit écrou, ladite deuxième surface d'appui coopérant avec celle définie par la tête de la douille pour assumer la fixation entre les deux éléments, puis
- à imprimer un deuxième mouvement de rotation à ladite tige à des fins de vissage pour installer une tension dans la fixation créée.

La traction n'est donc pas exercée par l'intermédiaire d'une liaison hélicoïdale mais directement sur la tige fixe associée à l'écrou. Le fait d'assurer une traction préalable permet de garantir un bon contact entre l'écrou et les éléments à fixer. Cette traction assure également un bon fluage du mastic d'étanchéité présent éventuellement entre les éléments à serrer. En outre, la traction assure la déformation de plusieurs parties du rivet ce qui contribue à les bloquer en rotation, caractéristique indispensable à l'étape suivante de vissage. Ce blocage en rotation ne rend plus nécessaire la présence de volumes en saillie ou en retrait sur la tête de la douille afin de permettre à l'outil de pose de bloquer cette dernière lors du mouvement hélicoïdal de la tige filetée. La surface supérieure de la douille reste donc vierge de tout volume en saillie ou en retrait ayant pour fonction de la bloquer en rotation. Cette caractéristique permet donc d'améliorer la traînée.

Selon une autre caractéristique, le procédé se base sur un rivet aveugle à tête fraisée constitué par une tige qui, dotée d'une tête fraisée et d'une partie filetée, est disposée à l'intérieur d'une douille creuse comprenant
une première extrémité adoptant extérieurement la forme d'une tête fraisée constituant une première surface d'appui et préformée intérieurement d'un volume conique pour recevoir la tête fraisée de la tige et
une deuxième extrémité sur laquelle un écrou coopérant avec la tige vient exercer un effort de traction transmis par la tige de sorte qu'une deuxième surface d'appui soit créée par déformation.

Conformément à la caractéristique principale de l'invention, le procédé est remarquable en ce qu'il consiste
- à imprimer un mouvement en translation à la tige afin de créer par déformation, ladite deuxième surface d'appui coopérant avec celle définie par la tête fraisée de la douille pour assumer la fixation, puis
- à imprimer un mouvement de rotation à ladite tige à des fins de vissage pour installer une tension dans la fixation créée.

Adapté à un rivet fraisé c'est à dire comprenant au moins une douille à tête fraisée, le procédé de fixation de l'invention propose une fixation sans aucun volume en saillie ou en retrait en regard de la surface extérieure du premier élément à fixer ménagé lui même d'une fraisure.

Une solution proposée par le procédé de l'invention réside dans le fait que, selon une caractéristique particulièrement avantageuse, l'effort de traction assure le montage serré de la douille à l'intérieur d'au moins le premier élément à fixer traversé. Cette caractéristique optimise le blocage en rotation du corps de la douille pour l'étape suivante de vissage.

La déformation de la douille ou de l'écrou à des fins de création d'un bulbe formant la deuxième surface d'appui peut être réalisée selon différentes méthodes.

L'invention concerne également le rivet adapté à la mise en oeuvre du procédé de l'invention. Selon l'invention, le rivet est remarquable en ce qu'il comporte une tige de mise en mouvement associée à la tête de la tige au moyen d'une zone de liaison dont la section est définie pour faciliter sa rupture une fois un couple de serrage atteint. Cette tige de liaison adopte une configuration autorisant son entraînement en traction ainsi qu'en rotation. Selon une caractéristique particulièrement avantageuse, cette tige de mise en mouvement comporte une surface extérieure préformée d'un filetage.

Selon une autre caractéristique particulièrement avantageuse de l'invention, l'effort de serrage par vissage est poursuivi jusqu'à l'obtention de la rupture de la tige de mise en mouvement. Une rupture par rotation en fin d'opération de fixation permet de minimiser l'effet du retour élastique de la matière et permet de garantir une meilleure tension installée c'est à dire un meilleur serrage dans la fixation structurelle mise en oeuvre. Cette caractéristique évite, une fois la séparation réalisée, la présence de toute forme en saillie ou en retrait sur la tête de la tige filetée.

Selon une autre caractéristique particulièrement avantageuse de l'invention, la douille adopte un renflement sous sa tête afin que la tête de la douille requière un effort supplémentaire pour son insertion dans l'orifice prévu pour l'accueillir dans la pièce à fixer. Selon un choix technologique, ce renflement consiste en une portion de longueur limitée et de diamètre supérieur à la partie cylindrique de l'orifice accueillant la douille.

Selon une autre caractéristique particulièrement avantageuse de l'invention mais non limitative, l'écrou et/ou l'extrémité de la douille sur laquelle il rentre en contact adopte des surfaces s'opposant à ladite rotation une fois la déformation réalisée. Ces surfaces peuvent être des cannelures ou des surfaces planes bloquant toute rotation tout en autorisant l'épanouissement préalable.

Selon une autre caractéristique particulièrement avantageuse de l'invention, le rivet aveugle est remarquable en ce que la surface extérieure de la tête de la douille présente une surface plane venant à la même hauteur que la surface de l'élément à fixer et ne comportant aucun volume en saillie ou en retrait.

Un autre objet de l'invention concerne l'outil de pose et notamment le nez de pose dudit rivet mettant en oeuvre ledit procédé, ce nez de pose est remarquable en ce qu'il est constitué par
- un corps fixe venant de part et d'autre de la tige de mise en mouvement prendre appui sur la surface extérieure de la tête de la douille,
- un organe de mise en mouvement logé dans le corps et susceptible d'être mu en translation et en rotation pour mettre en mouvement un organe de préhension avec lequel coopère la tige de mise en mouvement.

Selon une autre caractéristique particulièrement avantageuse, l'organe de préhension logé dans l'organe de mise en mouvement est ménagé d'un taraudage dans lequel vient s'engager la tige de mise en mouvement qui est elle-même filetée afin de la solidariser audit organe lors de la transmission du mouvement de translation et de rotation. Ce choix d'une liaison hélicoïdale non seulement pour une transmission de mouvement en translation mais également en rotation, rend particulièrement simple la réalisation de la tige de mise en mouvement.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, un mode de réalisation d'un procédé, d'un rivet et d'un outil de pose conformes à l'invention.

### BRÈVE DESCRIPTION DES DESSINS

La figure 1 est un dessin schématique d'une vue en coupe d'un mode de réalisation d'une fixation de type rivet conforme à l'invention,
La figure 2 est un dessin schématique d'une vue en coupe d'un autre mode de réalisation d'une fixation de type rivet conforme à l'invention,
Les figures 3, 4, 5 et 6 illustrent le procédé de l'invention,
La figure 7 est un dessin schématique d'une vue de dessus de la fixation mise en place.
La figure 8 d'une vue en coupe de deux autres modes de réalisation d'une fixation de type rivet conformes à l'invention,
Les figures 9 et 10 illustrent une partie du procédé de l'invention sur la base de ces modes de réalisation,
La figure 11 est un dessin schématique d'une vue en coupe d'un mode de réalisation conforme à l'invention d'un outil de pose associé au dit rivet de l'invention.

### DESCRIPTION DES MODES DE RÉALISATION PRÉFÉRÉS

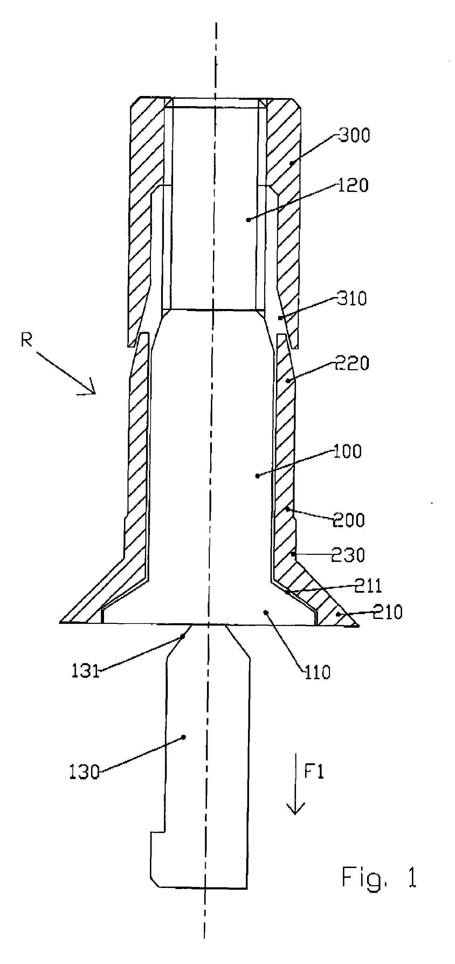

Tel qu'illustré sur le dessin de la figure 1, le rivet aveugle de l'invention référencé R dans son ensemble comprend une tige 100 qui dotée d'une tête fraisée 110 et d'une partie filetée 120, est disposée à l'intérieur d'une douille creuse 200 comprenant
une première extrémité adoptant extérieurement la forme d'une tête fraisée 210 constituant une première surface d'appui et préformée intérieurement d'un volume conique 211 pour recevoir la tête fraisée 110 de la tige 100 et
une deuxième extrémité 220 sur laquelle un écrou 300 coopérant avec la tige 100 vient exercer un effort de traction transmis par la tige 100 et illustré par la flèche F1 de sorte qu'une deuxième surface d'appui soit créée par déformation.

Comme illustrée, la tête 110 de la tige 100 est associée à une tige de mise en mouvement 130 par l'intermédiaire d'une zone de rupture 131.

Comme illustré, la deuxième extrémité 220 de la douille 200 et l'extrémité 310 de l'écrou 300 venant à son contact sont préformées de sorte que sous l'action d'un effort de traction imprimé par le mouvement de translation de la tige 100 ledit écrou vient se déformer autour de la deuxième extrémité 220 de la douille 200 afin de créer la deuxième surface d'appui. Pour mettre en oeuvre cet épanouissement, ladite deuxième extrémité adopte une forme tronconique mâle avec laquelle coopère une forme tronconique femelle ménagée dans l'extrémité 310 de l'écrou 300 venant en contact avec la deuxième extrémité de la douille.

Selon un autre mode de réalisation non illustré, l'écrou 300 et la douille 200 sont préformés de sorte que sous l'action de l'effort de traction transmis par la tige, la deuxième extrémité 200 de la douille s'épanouisse. A cette fin, la deuxième extrémité adopte une forme femelle avec laquelle coopère une forme mâle adoptée par ledit écrou.

Comme illustrée, la tige 120 n'est filetée qu'à son extrémité pour n'être en liaison hélicoïdale qu'avec l'écrou 300 et adopte une liaison de type pivot glissant avec la douille 200.

Le procédé de mise en place de la fixation constitué par ce rivet est remarquable en ce qu'il consiste à imprimer un effort de traction directe sur la tige filetée pour déformer la douille ou l'écrou afin de créer une deuxième surface d'appui avant d'imprimer un mouvement de rotation à ladite tige filetée à des fins de vissage pour installer une tension dans la fixation créée.

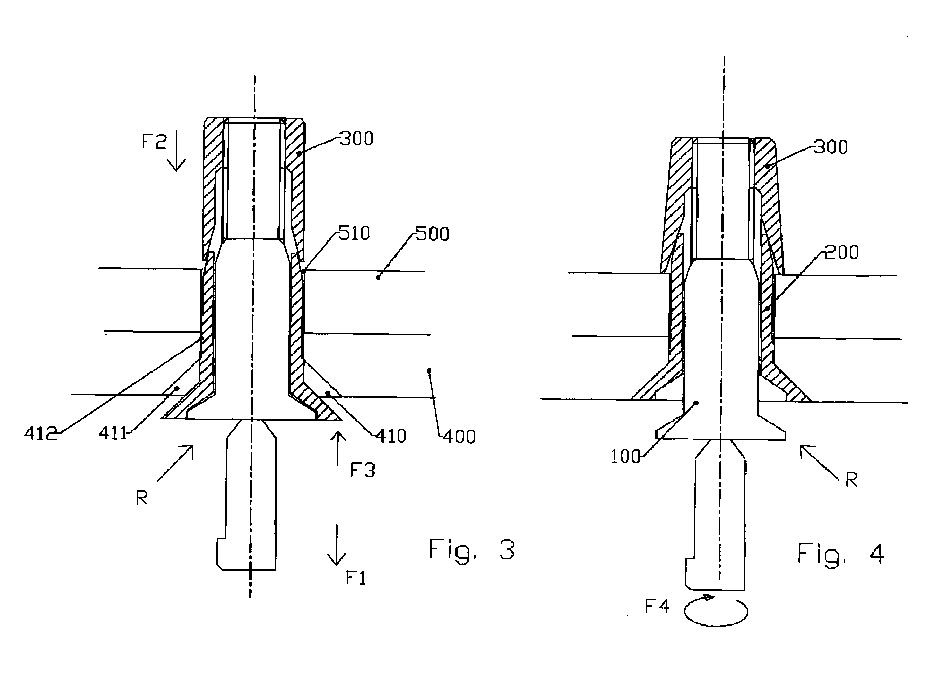

Ce procédé est illustré par les dessins des figures 3, 4, 5 et 6.

La figure 3 illustre la mise en place du rivet aveugle R à l'intérieur des orifices coaxiaux 410 et 510 réalisés dans les tôles 400 et 500 dont le rivet assure la fixation. Comme illustré, l'orifice 410 ménagé dans la première tôle 400 est ménagé d'une fraisure 411 pour accueillir la tête fraisée 210 de la douille 200 du rivet R prolongé par un trou cylindrique 412.

Conformément à l'invention, une portion 230 de la douille 400 située sous la tête fraisée 210 adopte un diamètre supérieur à celui du trou cylindrique 412 prolongeant la fraisure 411 de l'orifice 410. Lors du premier mouvement de mise en place cette portion 230 vient en butée sur le rebord du trou cylindrique 412.

Sous l'action d'un effort de traction simple symbolisé par la flèche F1 exercé sur la tige 100 et transmis à l'écrou 300, l'écrou 300 va s'épanouir sur la douille 200 et se rapprocher (flèche F2) de la tête de la douille de sorte que son extrémité 310 vienne en contact avec la surface de la tôle 500. L'effort de traction continu assure alors un mouvement relatif (flèche F3) de la douille vers l'écrou bloqué en translation, mouvement relatif assurant le montage serré entre la douille 200 et la première tôle 400.

Selon un mode de réalisation préféré, la longueur de la portion 230 et son diamètre est constant quelle que soit l'épaisseur de l'assemblage à fixer, de sorte que l'effort de pose ne soit pas modifié.

Le montage serré de la douille 200 évite la présence de volumes en saillie ou en retrait sur la tête 210 de la douille 200 avec lequel pourrait coopérer l'outil de pose afin d'empêcher sa mise en rotation.

La position obtenue après traction est illustrée par le dessin de la figure 4 dans laquelle la tête fraisée 210 de la douille 200 remplit le volume libre de la fraisure 411 et où l'écrou 300 forme une deuxième surface d'appui dont le rapprochement avec celle définie par la tête fraisée assure la bonne fixation des tôles 400 et 500 entre elles. Comme illustrée, la tête de la tige 100 se trouve alors à l'extérieur de la douille 200.

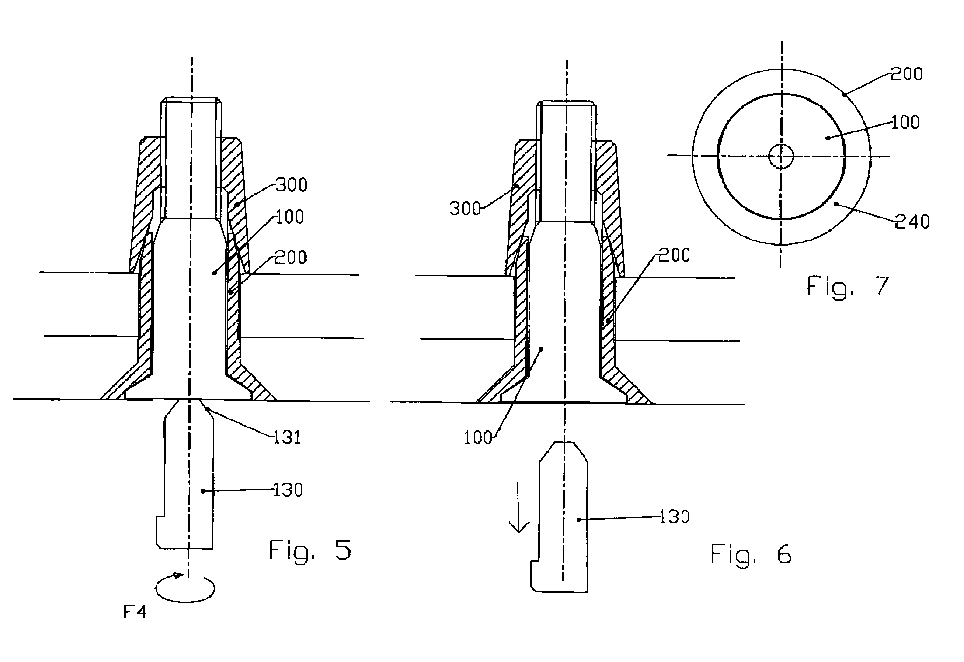

une fois la position de la figure 4 atteinte, la deuxième étape du procédé peut commencer à savoir l'installation d'une tension de serrage par vissage. Le mouvement de rotation (flèche F4) est imprimé à la tige de mise en mouvement 130 de sorte que la tige 100 pénètre dans la douille de par sa liaison hélicoïdale avec l'écrou 300 jusqu'à atteindre la position illustrée par le dessin d e la figure 5. Pour éviter toute mise en rotation dudit écrou 300 malgré la déformation due à la première étape de traction, l'écrou 300 et/ou l'extrémité tronconique 220 de la douille sur laquelle il rentre en contact et s'épanouit adopte des surfaces s'opposant à ladite rotation telles des cannelures ou des surfaces planes bloquant toute rotation une fois l'écrou 300 épanoui.

Comme illustré en figure 6, le vissage pour serrage peut continuer jusqu'à un certain couple provoquant la rupture de la zone de liaison 131 avec l'arbre 130. Cette rupture laisse la tête 110 de tige 100 inscrite dans la tête 210 de douille 200 sans aucun volume en saillie ou en retrait conformément aux objectifs de l'invention. La figure 7 montre en vue de dessus cette absence d'arête affleurante notamment sur la surface extérieure 240 de la douille 200.

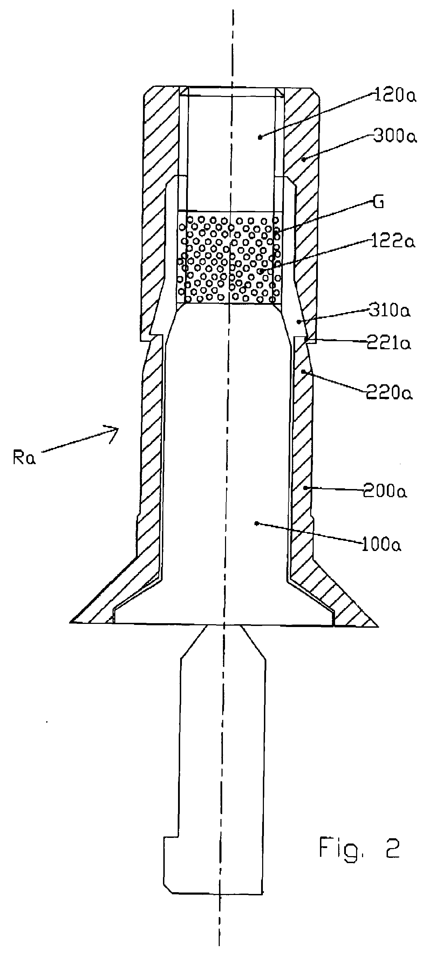

Le mode de réalisation illustré par le dessin de la figure 2 diffère de celui ci-dessus décrit plus haut en ce que l'écrou 300a constitue dans un premier temps avec la douille 200a une seule et même pièce, en étant associé à cette dernière par une zone de liaison 221a dont ledit effort de traction exercé lors du mouvement de translation, assure la rupture. Ainsi sous l'action de l'effort de traction transmis par la tige 100a, la zone de liaison 221a se casse et laisse l'écrou 300a s'épanouir autour de l'extrémité 220a de la douille 200a.

Cette figure 2 sert de support à l'illustration d'une autre caractéristique particulièrement avantageuse susceptible de s'appliquer à l'ensemble des modes de réalisation. Conformément à l'invention et selon le mode de réalisation illustré, la partie filetée 120a de la tige 100a se décompose en :
- une première zone 121a de filets démarrant à partir de l'extrémité de la tige qui ont été vissés dans les filets de l'écrou 300a et qui assure la liaison avec cet écrou 300a en position de repos et lors de la transmission du mouvement en translation,
- une deuxième zone 122a de filets comportant un dépôt d'une matière collante G et qui n'est pas en contact avec l'écrou 300a lors de la transmission du mouvement en translation mais vient coopérer avec ce dernier lors du mouvement de vissage.

Cette caractéristique participe à l'optimisation de la fixation créée par l'invention.

Selon un mode de réalisation préféré, cette matière collante G est déposée sous la forme de micro-capsules sur le filetage.

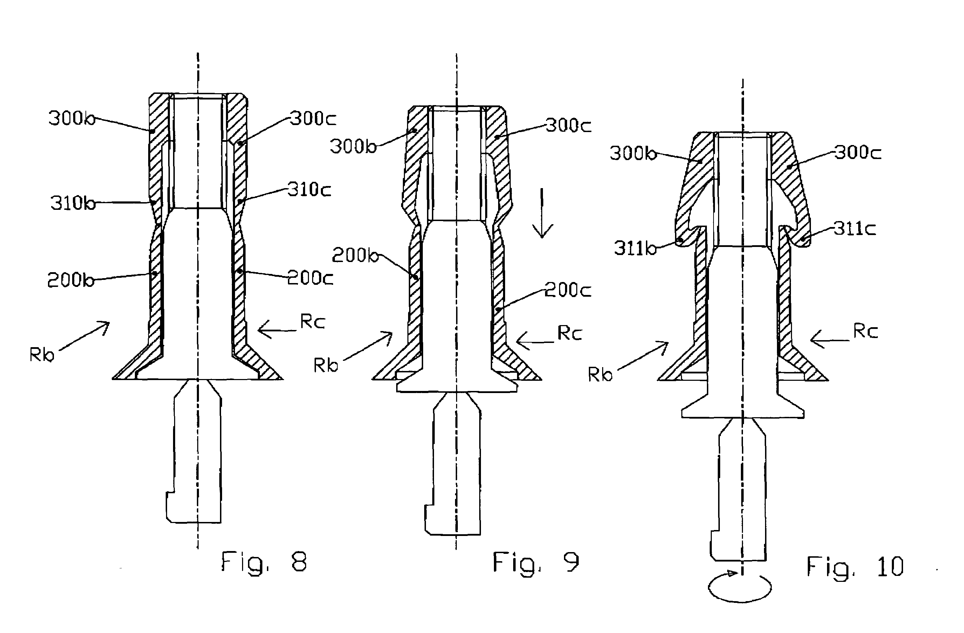

Selon les modes de réalisation illustrés par les dessins des figures 8, 9 et 10, le rivet Rb illustré côté gauche de l'axe et le rivet Rc illustré côté droit présentent la spécificité d'un écrou 300b et 300c qui est préformé dans sa partie inférieure 310b et 310c de façon à s'épanouir en se pliant vers l'extérieur et former par ce pliage un bourrelet 311b et 311c, Ces rivets Rb et RC permettent une fixation optimisée car ce bourrelet définit une surface de contact plus large et plus éloignée du rebord du trou pratiqué dans l'élément à fixer. Les figures 8, 9 et 10 illustrent la progression du pliage formé lors de la première phase de traction du procédé de l'invention. La deuxième phase de vissage n'est pas illustré puisque équivalente.

Bien que de forme extérieure sensiblement équivalente, les rivets Rb et Rc différent en ce que la douille est en deux parties pour le mode de réalisation Rb avec un écrou 300b indépendant de la douille 200b et d'un seul tenant pour le mode de réalisation Bc avec un écrou 300c indépendant de la douille 200c.

Selon un mode de réalisation préféré, la tige peut être en acier inoxydable fortement écroui, en titane, etc...
La douille peut être en acier inoxydable, titane, inconel etc...
L'écrou peut être en acier inoxydable, titane, aluminium, etc...

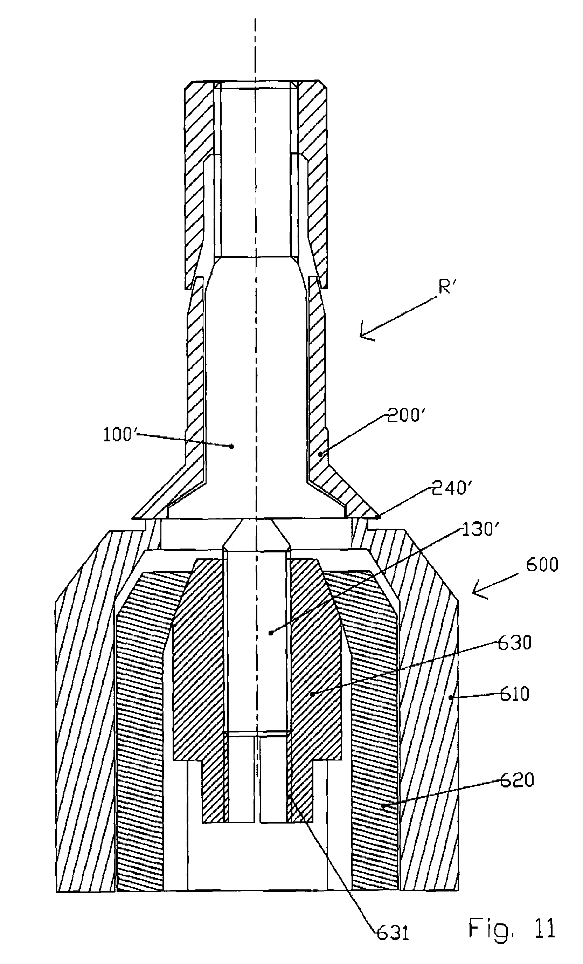

Comme illustré sur le dessin de la figure 11, l'outil de pose et notamment le nez de pose 600 dudit rivet R' mettant en oeuvre ledit procédé, est constitué par
- un corps fixe 610 venant de part et d'autre de la tige 130' de mise en mouvement, prendre appui sur la surface extérieure 240' de la tête de la douille 200',
- un organe de mise en mouvement 620 logé dans le corps 600 et susceptible d'être mu en translation et en rotation pour mettre en mouvement un organe de préhension 630 avec lequel coopère la tige de mise en mouvement 130'.

Selon une autre caractéristique particulièrement avantageuse et conformément au mode de réalisation illustré, l'organe de préhension 630 logé dans l'organe de mise en mouvement 620 est ménagé d'un taraudage 631 dans lequel vient se visser la tige de mise en mouvement 130' qui est elle-même filetée afin de la solidariser audit organe de préhension 630 lors de la transmission du mouvement de translation et de rotation. Ce choix d'une liaison hélicoïdale non seulement pour une transmission de mouvement en translation mais également en rotation rend particulièrement simple la réalisation de la tige de mise en mouvement 130'.

On comprend que le procédé de fixation et le rivet aveugle, qui viennent d'être ci-dessus décrits et représentés, l'ont été en vue d'une divulgation plutôt que d'une limitation. Bien entendu, divers aménagements, modifications et améliorations pourront être apportés à l'exemple ci-dessus, sans pour autant sortir du cadre de l'invention.

## Revendications

1. Procédé de fixation structurelle d'au moins deux éléments (400 et 500) dans lesquels des orifices de fixation ont été aménagés et rendue coaxiaux,
ledit procédé utilisant un rivet aveugle (R) se plaçant dans les orifices de fixation et comprenant une tige (100) qui, dotée d'une tête (110) et d'une partie filetée (120), est disposée à l'intérieur d'une douille (200) creuse comprenant
une première extrémité équipée d'une tête (210) qui, constitue une première surface d'appui sur un premier élément, et
une deuxième extrémité (220) sur laquelle un écrou (300) coopérant avec la partie filetée de la tige (100) vient exercer un effort transmis par la tige (100) de sorte qu'une deuxième surface d'appui sur le deuxième élément soit créée par déformation, **CARACTÉRISÉ EN CE QU'**il consiste
- à imprimer un premier mouvement de translation (flèche F1) à la tige (100) afin de créer, par déformation sous l'action dudit écrou, ladite deuxième surface d'appui coopérant avec celle définie par la tête (210) de la douille (200) pour assumer la fixation entre les deux éléments, puis
- à imprimer un deuxième mouvement de rotation (flèche F4) à ladite tige (100) à des fins de vissage pour installer une tension dans la fixation créée.

2. Procédé de fixation structurelle d'au moins deux éléments dans lesquels des orifices de fixation ont été aménagés et rendus coaxiaux, ledit procédé utilisant un rivet aveugle (R) constitué par une tige (100) qui, dotée d'une tête fraisée (110) et d'une partie filetée (120), est disposée à l'intérieur d'une douille (200) creuse comprenant
une première extrémité adoptant extérieurement la forme d'une tête fraisée (210) constituant une première surface d'appui et préformée intérieurement d'un volume conique (211) pour recevoir la tête fraisée (110) de la tige (100) et
une deuxième extrémité (220) sur laquelle un écrou (300) coopérant avec la tige (100) vient exercer un effort de traction transmis par la tige (120) de sorte qu'une deuxième surface d'appui soit créée par déformation, **CARACTÉRISÉ EN CE QU'**il consiste
- à imprimer un mouvement en translation (flèche F1) à la tige (100) afin de créer par déformation de ladite deuxième surface d'appui coopérant avec celle définie par la tête fraisée (210) de la douille (200) pour assumer la fixation, puis
- à imprimer un mouvement de rotation (flèche F4) à ladite tige (100) à des fins de vissage pour installer une tension dans la fixation créée.

3. Procédé selon les revendications 1 et 2, **CARACTÉRISÉ EN CE QUE** l'effort de traction assure le montage serré de la douille (200) à l'intérieur d'au moins le premier élément à fixer (400) traversé.

4. Procédé selon les revendications 1 et 2, **CARACTÉRISÉ EN CE QU'**il consiste, lors du mouvement de translation de la tige, à faire déformer l'écrou autour de la deuxième extrémité de la douille afin de créer la deuxième surface d'appui.

5. Rivet aveugle (R) permettant de mettre en oeuvre le procédé des revendications 1 et 2, **CARACTÉRISÉ PAR LE FAIT QUE** la tige (120) n'est filetée qu'à son extrémité pour n'être en liaison hélicoïdale qu'avec l'écrou (300) et adopte une liaison de type pivot glissant avec la douille (200).

6. Rivet aveugle (R) permettant de mettre en oeuvre le procédé selon les revendications 1 et 2, **CARACTÉRISÉ PAR LE FAIT QU'**il comporte une tige de mise en mouvement (130) associée à la tête (110) de la tige (100) au moyen d'une zone de liaison (131) dont la section est définie pour faciliter sa rupture une fois un couple de serrage atteint, cette tige (130) adoptant un profil autorisant son entraînement en traction ainsi qu'en rotation.

7. Rivet aveugle selon la revendication 6, **CARACTÉRISÉ PAR LE FAIT QUE** la tige de mise en mouvement comporte une surface extérieure préformée d'un filetage.

8. Rivet aveugle (Ra) permettant de mettre en ouvre le procédé selon les revendications 1 et 2, **CARACTÉRISÉ PAR LE FAIT QUE** l'écrou (300a) est associé à la douille (200a) par une zone de liaison (221a) dont ledit effort de traction exercé lors du mouvement de translation, assure la rupture.

9. Rivet aveugle (R) permettant de mettre en oeuvre le procédé selon les revendications 1 et 2, **CARACTÉRISÉ PAR LE FAIT QUE** la douille (200) adopte un renflement (230) sous sa tête (210) afin que la tête (210) de la douille (200) requière un effort supplémentaire pour son insertion dans l'orifice prévu pour l'accueillir dans la pièce à fixer.

10. Rivet aveugle (R) permettant de mettre en oeuvre le procédé selon les revendications 1 et 2, **CARACTÉRISÉ PAR LE FAIT QUE** l'écrou (300) et/ou l'extrémité (220) de la douille sur laquelle il rentre en contact adopte des surfaces s'opposant à ladite rotation une fois la déformation réalisée.

11. Rivet aveugle (R) permettant de mettre en oeuvre le procédé selon les revendications 1 et 2, **CARACTÉRISÉ PAR LE FAIT QUE** la partie filetée (120a) de la tige (100a) se décompose en :
- une première zone (121a) de filets démarrant à partir de l'extrémité de la tige qui ont été vissés dans les filets de l'écrou (300a) et qui assure la liaison avec cet écrou (300a) en position de repos et lors de la transmission du mouvement en translation,
- une deuxième zone (122a) de filets comportant un dépôt d'une matière collante (G) et qui n'est pas en contact avec l'écrou (300a) lors de la transmission du mouvement en translation mais vient coopérer avec ce dernier lors du mouvement de vissage.

12. Rivet aveugle permettant de mettre en oeuvre le procédé selon les revendications 1 et 2, **CARACTÉRISÉ PAR LE FAIT QUE** la surface extérieure (240) de la tête de la douille (200) présente une surface plane venant à la même hauteur que la surface de l'élément à fixer (400) et ne comportant aucun volume en saillie ou en retrait

13. Outil de pose comportant un nez de pose adapté au procédé selon les revendications 1 et 2, **CARACTÉRISÉ PAR LE FAIT QUE** le nez de pose (600) est constitué par
- un corps fixe (610) venant de part et d'autre de la tige (130') de mise en mouvement, prendre appui sur la surface extérieure (240') de la tête de la douille (200'),
- un organe de mise en mouvement (620) logé dans le corps (600) et susceptible d'être mu en translation et en rotation pour mettre en mouvement un organe de préhension (630) avec lequel coopère la tige de mise en mouvement (130').

14. Outil de pose comportant un nez de pose adapté au procédé selon la revendication 13, **CARACTÉRISÉ PAR LE FAIT QUE** l'organe de préhension (630) logé dans l'organe de mise en mouvement (620) est ménagé d'un taraudage (631) dans lequel vient s'engager la tige de mise en mouvement (130') qui est elle-même filetée afin de la solidariser audit organe de préhension (630) lors de la transmission du mouvement de translation et de rotation.
